# FASCICULE DE BREVET EUROPEEN

(11) **EP 2 805 039 B1**
(45) Date de publication et mention de la délivrance du brevet: **04.11.2015**
(21) Numéro de dépôt: 13704160.4
(22) Date de dépôt: 16.01.2013
(51) Int. Cl.: F02K 9/48

(54) **MOTEUR POUR FUSÉE A ALIMENTATION OPTIMISÉE**
RAKETENMOTOR MIT OPTIMIERTER BRENNSTOFFZUFUHR
ROCKET ENGINE WITH OPTIMIZED FUEL SUPPLY

(30) Priorité: 17.01.2012 FR 1250460
(43) Date de publication de la demande: 26.11.2014
(73) Titulaire: Snecma, 75015 Paris (FR)
(72) Inventeur: SOULIER, Nicolas, F-27600 Fontaine Bellenger (FR); HAYOUN, David, F-75116 Paris (FR); SANNINO, Jean Michel, F-27950 Saint-marcel (FR)
(74) Mandataire: Duflos, Bertrand Guillaume
(86) Numéro de dépôt international: PCT/FR2013/050094
(87) Numéro de publication internationale: WO 2013/107981

(56) Documents cités:
- US-A- 3 541 793
- US-A- 3 672 165
- US-A- 5 444 973
- US-A- 5 551 230
- US-A1- 2001 015 063
- US-B1- 7 784 268

## Description

L'invention concerne un moteur pour fusée, comprenant :
- une préchambre de combustion ;
- une chambre principale de combustion ;
- deux conduites d'alimentation pour l'alimentation du moteur respectivement en carburant et en comburant ;
- deux turbopompes, chacune comprenant une pompe associée à une turbine, lesdites pompes étant disposées à des extrémités aval respectives des conduites d'alimentation et étant aptes à pomper le carburant et comburant des conduites d'alimentation vers la chambre principale de combustion via un circuit de distribution de fluides ;
le circuit de distribution étant apte à diriger au moins une partie du carburant et du comburant vers la préchambre pour y être brûlés, et à diriger les gaz chauds ainsi produits de la préchambre à la chambre de combustion en entraînant au moins une turbine des turbopompes.

Un tel moteur est dit 'moteur à combustion étagée'. L'invention propose une amélioration dans le circuit d'alimentation en carburant ou comburant d'un moteur de ce type.

La réalisation d'un tel moteur nécessite de prévoir l'injection des gaz chauds sortant des turbines dans une tête d'injection intégrée à la chambre principale de combustion. Pour cette injection de gaz chauds, il est préférable d'implanter les pompes d'alimentation du moteur avec les pompes vers le bas et les turbines vers le haut, afin de réduire au maximum la longueur du circuit de réinjection des gaz chauds (depuis leur sortie des turbines jusqu'à la tête d'injection).

Cependant, cette architecture implique que les conduites d'alimentation comportent des coudes en amont des pompes. Or, ces coudes génèrent des pertes de charge dans les conduites d'alimentation, qui sont néfastes au bon fonctionnement des pompes pendant les phases de fonctionnement du moteur. Aussi, pour maintenir néanmoins une pression suffisante aux orifices d'admission des pompes lorsque le moteur fonctionne, on équipe habituellement le circuit d'alimentation en carburant ou comburant d'une pompe de gavage, disposée dans la conduite d'alimentation ou entre celle-ci et le réservoir de carburant ou comburant.

Cette solution présente cependant l'inconvénient d'ajouter un composant supplémentaire dans le moteur, à savoir les pompes de gavage et leurs systèmes d'alimentation: Il s'ensuit un surplus de complexité, de prix, et de poids.

Par ailleurs, différents moteurs pour fusée comportant une préchambre sont divulgués par le document US 2001/0015063. Dans le but de simplifier la conception de tels moteurs, ce document enseigne d'agencer le circuit de distribution des gaz de telle sorte que les gaz de combustion provenant de la préchambre soient injectés dans une des conduites principales.

Ce mode de réalisation cependant conduit à injecter des gaz extrêmement chauds par rapport au carburant ou comburant circulant dans la conduite principale. Cette injection expose les composants en aval du point d'injection dans la conduite principale à des écarts et contraintes thermiques énormes ; de plus, dans ces conditions il est difficile d'assurer un fonctionnement stable du moteur.

Une autre solution connue pour assurer une pression suffisante aux orifices d'admission des pompes consiste à élever la pression dans les réservoirs de carburant et/ou de comburant. Cependant, cette solution entraîne également une augmentation de complexité et notamment de poids du fait de l'augmentation induite sur l'épaisseur des parois des réservoirs.

L'objectif de l'invention est de proposer un moteur du type présenté en introduction, dans lequel les pertes de charge générées par les coudes des lignes d'alimentation du moteur soient au moins partiellement compensées, de manière à maintenir une pression suffisante aux orifices d'admission des pompes, et cela sans utiliser de turbomachine supplémentaire comme une pompe de gavage, de manière à réduire les coûts et la masse de l'ensemble propulsif.

Cet objectif est atteint grâce au fait que dans le moteur, dans au moins une première conduite d'alimentation alimentant une première desdites pompes est agencée une pompe à jet, et que le circuit de distribution est apte à diriger une partie du fluide circulant dans ladite première conduite d'alimentation et ayant été mise sous pression vers ladite pompe à jet, et la pompe à jet est apte à injecter ladite partie de fluide de manière à entraîner le fluide circulant dans ladite première conduite d'alimentation vers un orifice d'admission de ladite première pompe. Sous l'effet de cet entraînement, la pression dans la première conduite d'alimentation en amont de l'orifice d'admission de la première pompe augmente. Cette augmentation de pression permet le maintien d'une pression relativement élevée à l'orifice d'admission de ladite première pompe et réduit voire élimine la cavitation dans celle-ci.

Par « partie de fluide circulant dans ladite première conduite d'alimentation et ayant été mise sous pression » on désigne un flux de fluide prélevé sur la première conduite d'alimentation, et porté à une pression est nettement plus élevée que celle de la conduite d'alimentation et par exemple, dont la pression excède d'au moins 100 Bar la pression dans la conduite d'alimentation.

Ce flux de fluide peut être mis sous pression soit dans la première conduite principale, avant d'y être prélevé : En général sa mise sous pression est alors réalisée par la première pompe citée précédemment. De manière alternative, ce flux de fluide peut être mis sous pression après avoir été prélevé dans la première conduite principale, par exemple par un surpresseur.

De préférence, la pompe à jet injecte uniquement dans la première conduite d'alimentation ladite partie de fluide (c'est-à-dire, que ladite partie de fluide est injectée seule, sans être mélangée à d'autres fluides). La partie de fluide peut notamment être prélevée sur la première conduite principale par une conduite de dérivation et mise sous pression.

Par suite, le flux de fluide injecté par la pompe à jet est de même composition que le fluide circulant dans la première conduite principale.

Il s'ensuit que l'injection de fluide par la pompe à jet ne modifie pas la composition chimique du fluide circulant dans la première conduite principale. Par suite, avantageusement cette injection de fluide ne risque pas de détériorer la qualité de combustion dans la chambre principale de combustion en suscitant des variations non souhaitables de la stoechiométrie des produits injectés dans cette chambre.

De préférence, le circuit de distribution est agencé de telle sorte que le fluide injecté par la pompe à jet ne comporte pas de gaz de combustion, issus par exemple de la préchambre ou d'une autre combustion. Ainsi, la température du fluide injecté par la pompe à jet est voisine de la température du fluide dans la première conduite principale au point d'injection de fluide par la pompe à jet (c'est-à-dire, l'écart de température reste inférieur à 50K ou 100K). Grâce à cela, l'injection de fluide par la pompe à jet, en particulier si elle est irrégulière ou non constante, ne génère pas de variations de température susceptible de créer des contraintes thermiques préjudiciables au moteur.

De préférence, le circuit de distribution est agencé de telle sorte que le fluide injecté par la pompe à jet est en phase liquide tout comme le fluide circulant dans la première conduite d'alimentation au point d'injection de fluide par la pompe à jet. Par suite, l'injection de fluide par la pompe à jet ne crée pas un écoulement diphasique, susceptible de provoquer des variations non souhaitables dans la chambre principale de combustion de la stoechiométrie et des quantités des produits injectés dans cette chambre.

Selon l'invention, du fluide sous pression est injecté à grande vitesse dans la conduite d'alimentation, et donc en amont de la première pompe. Suite à l'injection, la vitesse du fluide injecté chute brutalement. Inversement, la perte de quantité de mouvement du fluide est convertie en hausse de pression. Cette hausse de pression permet de compenser la perte de charge se produisant dans la conduite d'alimentation.

Dans la définition précédente, la présence d'une pompe à jet n'est spécifée que pour une seule conduite d'alimentation. Cependant, de préférence les deux conduites d'alimentation sont équipées de pompes à jet, ce qui permet de bénéficier de l'apport de l'invention pour le carburant comme pour le comburant du moteur.

Le moteur peut comporter une ou deux préchambres. Dans le second cas, les préchambres sont associées respectivement au carburant et au comburant.

De préférence, le fluide sous pression est une partie du fluide refoulé par la première pompe.

Cependant, si un surpresseur est utilisé pour comprimer le carburant ou le comburant en aval de ladite première pompe, le flux de fluide sous pression fourni à la pompe à jet peut également être prélevé sur un flux de fluide refoulé par le surpresseur, et notamment à un orifice de refoulement du surpresseur ou par prélèvement sur une conduite de fluide reliée à cet orifice.

Le surpresseur prend généralement la forme d'une pompe à un rouet (ou roue à aubes), située immédiatement en aval de la pompe principale et agencée sur le même arbre que celle-ci. Le surpresseur a pour fonction d'élever la pression d'une partie du carburant ou comburant prélevée sur la conduite principale, pour porter cette pression à une valeur suffisante pour l'injection du fluide prélevé dans la préchambre de combustion.

Le fonctionnement de la ou des pompe(s) à jet peut en outre être régulé par exemple par une valve de régulation disposée sur la conduite d'alimentation en fluide sous pression de cette pompe (ou de ces pompes). Dans ce cas, le moteur comprend en outre une valve de régulation disposée sur la conduite d'alimentation en fluide sous pression de la pompe à jet, et dont une ouverture peut être commandée de manière à contrôler une pression à un orifice d'admission de ladite première pompe.

La structure du moteur selon l'invention présente les avantages suivants :
- une grande facilité d'aménagement du moteur, la pompe à jet étant très compacte, et permettant la suppression de la pompe de gavage utilisée antérieurement ;
- une grande simplicité de mise en oeuvre,
- une robustesse élevée en l'absence de parties tournantes, et,
- dans le cas d'un moteur avec surpresseur, l'utilisation optimisée du fluide refoulé en sortie du surpresseur.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une coupe axiale schématique d'un moteur pour fusée de type connu ;
- la figure 2 est une coupe axiale schématique d'un moteur pour fusée selon l'invention ;
- la figure 3 est une coupe axiale schématique d'une pompe à jet utilisée dans le moteur de la figure 2 ;
- la figure 4 est une coupe axiale schématique d'un moteur pour fusée de type connu.
- la figure 5 est une coupe axiale schématique d'un moteur pour fusée selon l'invention, dans un mode de réalisation avec surpresseur et préchambre unique.

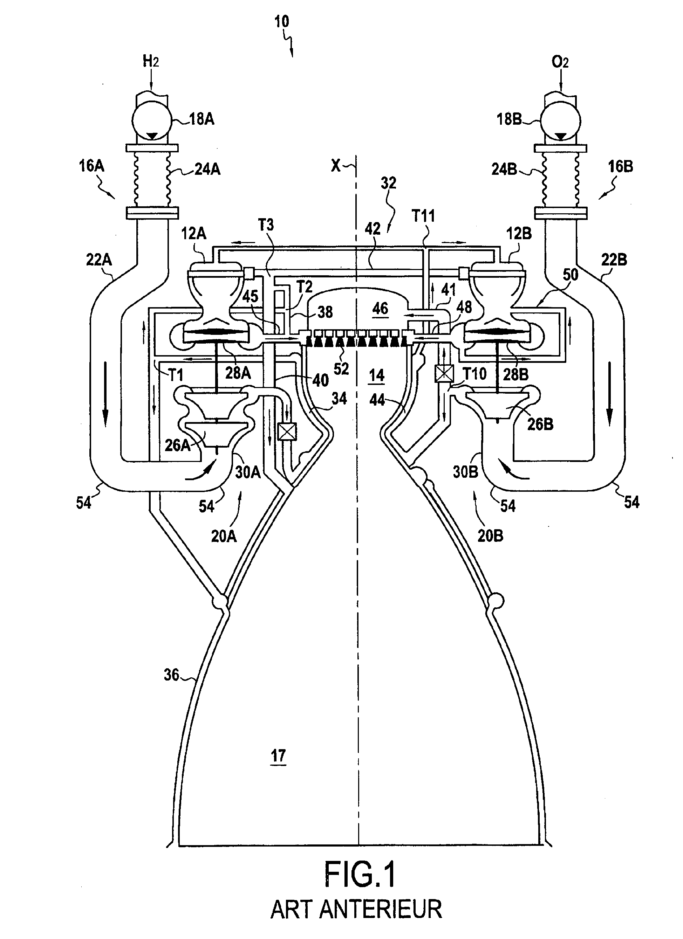

En faisant référence à la figure 1, un moteur 10 pour fusée de type connu va maintenant être décrit.

Ce moteur 10 est un moteur à combustion étagée. Il assure l'aspiration et la mise en pression d'un comburant et d'un carburant qui sont brûlés et détendus dans une chambre principale de combustion 14. Dans l'exemple présenté, le carburant est de l'hydrogène et le comburant de l'oxygène ; d'autres couples carburant/comburant peuvent être utilisés dans le cadre de l'invention.

Le moteur 10 comprend deux préchambres de combustion 12A,12B ; une chambre principale de combustion 14 ; deux circuits d'alimentation 16A,16B pour l'alimentation du moteur respectivement en carburant et en comburant ; une tuyère présentant un divergent 17 ; et deux turbopompes 20A,20B.

Chacun des circuits d'alimentation 16A,16B comporte une pompe de gavage (18A,18B), un tronçon flexible (24A,24B), une conduite d'alimentation (22A,22B).

Les turbopompes 20A et 20B sont des turbopompes de types connus en soi respectivement pour l'hydrogène et pour l'oxygène. Chacune d'elles comprend une pompe (pompes 26A,26B) associée à une turbine (turbines 28A,28B). La pompe 26A est une pompe à deux étages alors que la pompe 26B ne comporte qu'un seul étage. Les pompes 26A,26B sont disposées aux extrémités aval 30A,30B respectives des conduites d'alimentation 22A,22B. Les pompes 26A,26B servent respectivement à pomper le carburant et le comburant depuis les réservoirs (non représentés) dans lesquels ils sont stockés via les conduites d'alimentation, et jusqu'à la chambre principale de combustion 14 via un circuit 32 de distribution de fluides.

Le moteur 10 fonctionne de la manière suivante.

Le carburant et le comburant sont pompés dans leurs réservoir respectifs par les pompes de gavage 18A,18B ; ils transitent via les tronçons flexibles 24A,24B et les lignes d'alimentation 22A,22B. Ils sont alors pompés depuis ces conduites par les pompes 26A,26B.

### Circuit du carburant

La pompe 26A refoule le fluide en provenance de la conduite 22A vers un circuit régénératif de carburant 34. Ce circuit 34 circule au contact de la chambre de combustion 14, ce qui permet de refroidir celle-ci tout en élevant la température du carburant. En sortie du circuit 34, le flux de gaz se divise en un embranchement T1. Une première partie des gaz est dirigée vers un circuit 36 de refroidissement du divergent. L'autre partie des gaz est de nouveau divisée en un second embranchement T2. Une première partie des gaz transitant par cet embranchement est injectée dans la chambre de combustion via une conduite 38 ; une partie est dirigée vers le circuit 36 de refroidissement du divergent via une conduite 40 ; le restant est dirigé au moyen d'une conduite 42 vers les deux préchambres 12A,12B via un troisième embranchement T3.

### Circuit du comburant

La pompe 26B refoule le fluide en provenance de la conduite 22B vers un embranchement T10 au niveau duquel le flux de comburant est divisé en deux. Une première partie est dirigée vers la chambre de combustion 14 via une ligne 41. Elle y est injectée dans le dôme 46 où elle est brûlée avec les gaz chauds provenant des turbines 28A,28B.

La deuxième partie du flux transitant par l'embranchement T10 est dirigée vers un circuit régénératif de comburant 44, qui circule au contact de la chambre principale de combustion 14. En sortie du circuit 44, le flux est divisé à nouveau au niveau d'un embranchement T11 pour alimenter en comburant les deux préchambres 12A et 12B.

Comme indiqué précédemment, une partie du carburant et du comburant est prélevée dans le circuit de distribution 32 et dirigée vers les préchambres 12A et 12B. Les gaz produits par la combustion qui s'ensuit dans ces préchambres passent à travers les turbines 28A et 28B. La puissance transmise à ces turbines par ces gaz permet d'entraîner les pompes 26A,26B des turbopompes 20A,20B. Les gaz chauds sortant de la turbine 28A sont injectés dans la chambre de combustion 14 via une conduite 45, mêlés au flux de carburant passant dans la conduite 38. Les gaz chauds sortant de la turbine 28B sont injectés dans la chambre de combustion 14 via une conduite 48. Dans les deux cas (conduites 45 et 48), les gaz provenant des turbines 28A et 28B - mélangés à du carburant, dans le cas de la conduite 45 -, sont injectés dans la chambre 14 via une tête d'injection 52.

Ils y sont alors brûlés avec le comburant injecté par la conduite 41.

Les gaz brûlés dans la chambre de combustion 14 sont éjectés et détendus dans le divergent 17.

Par ailleurs, un système de régulation 50 permet de dévier une partie des gaz chauds sortant de la turbine 28B et de les réinjecter dans la préchambre 12B, en amont de la turbine 28B. Ce système permet d'assurer le contrôle de la puissance transmise par les turbopompes 20A et 20B.

Dans le moteur 10, les conduites 45 et 48 de gaz chauds, qui assurent l'acheminement des gaz depuis les turbines 28A et 28B jusqu'à la tête d'injection 52 dans la chambre principale, sont les éléments les plus critiques. C'est pourquoi les longueurs de ces conduites doivent être réduites au maximum. Pour cela, et afin d'assurer une bonne compacité du moteur les turbopompes 20A et 20B sont disposées 'pompe en bas'. Cela permet en effet de rapprocher au maximum les turbines 26A et 26B de la tête d'injection 52 (dans la figure 1, le haut de la figure correspond avec la direction verticale vers le haut du moteur en position de fonctionnement).

Cependant, l'aménagement du moteur 10 avec les pompes 26A et 26B en base des turbopompes nécessite l'utilisation de coudes 54 en amont des pompes. Dans le moteur 10, la perte de charge engendrée par ces coudes 54 est compensée par les pompes de gavage 18A et 18B.

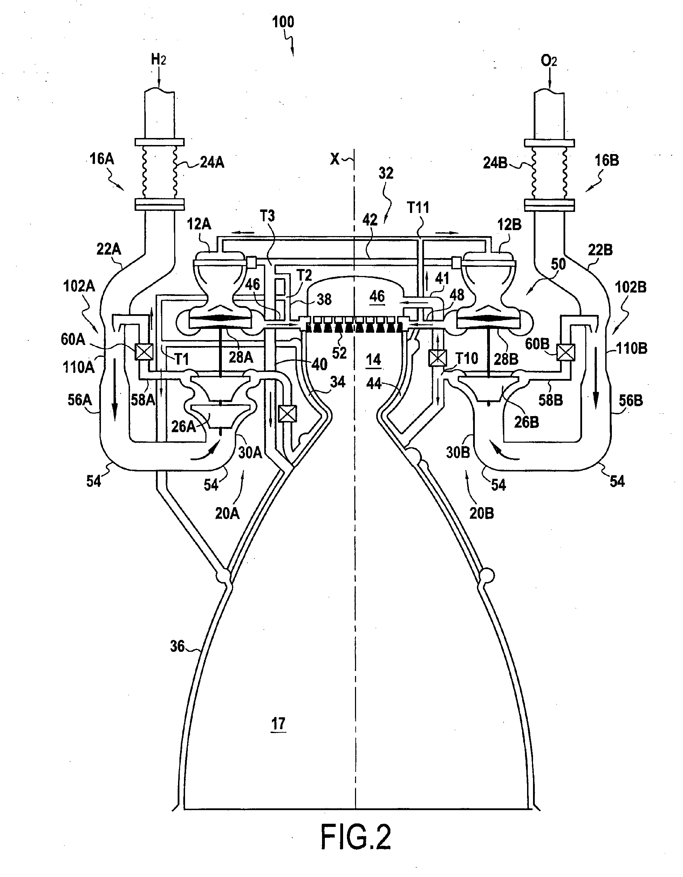

La figure 2 présente un mode de réalisation de l'invention qui permet d'éviter le recours aux pompes de gavage 18A et 18B.

La figure 2 représente un moteur 100 qui est sauf mention contraire identique au moteur 10. Pour cette raison, les éléments identiques ou similaires portent les mêmes références.

La spécificité du moteur 100, par rapport au moteur 10, est que celui-ci comporte deux pompes à jet 102A,102B ; et qu'inversement, il n'est pas prévu de fonctionner avec des pompes de gavage telles que les pompes 18A,18B du moteur 10. Le moteur 100 peut ainsi fonctionner avec du carburant et du comburant provenant directement de leurs réservoirs respectifs, sans nécessairement passer par des pompes de gavage.

Les pompes à jet 102A,102B sont situées en amont des coudes 54, sur des tronçons 56A,56B des conduites 22A,22B qui sont parallèles à l'axe X du moteur 100.

Elles sont alimentées en gaz par des conduites d'alimentation 58A,58B qui prélèvent une partie du gaz refoulé aux orifices de refoulement des pompes 26A,26B.

La solution proposée consiste donc à ce que le circuit de distribution soit agencé de manière à diriger une partie du fluide circulant dans les conduites principales d'alimentation, en aval des pompes 26A,26B qui ont pour effet d'élever la pression du fluide, pour alimenter les pompes à jet situées en amont des coudes 54 et donc des pompes 26A, 26B. (Dans un autre mode de réalisation présenté plus bas, le fluide utilisé pour alimenter les pompes à jet et du fluide sous pression provenant de l'une des conduites principales et mis sous pression par le surpresseur utilisé pour alimenter en carburant ou comburant la préchambre).

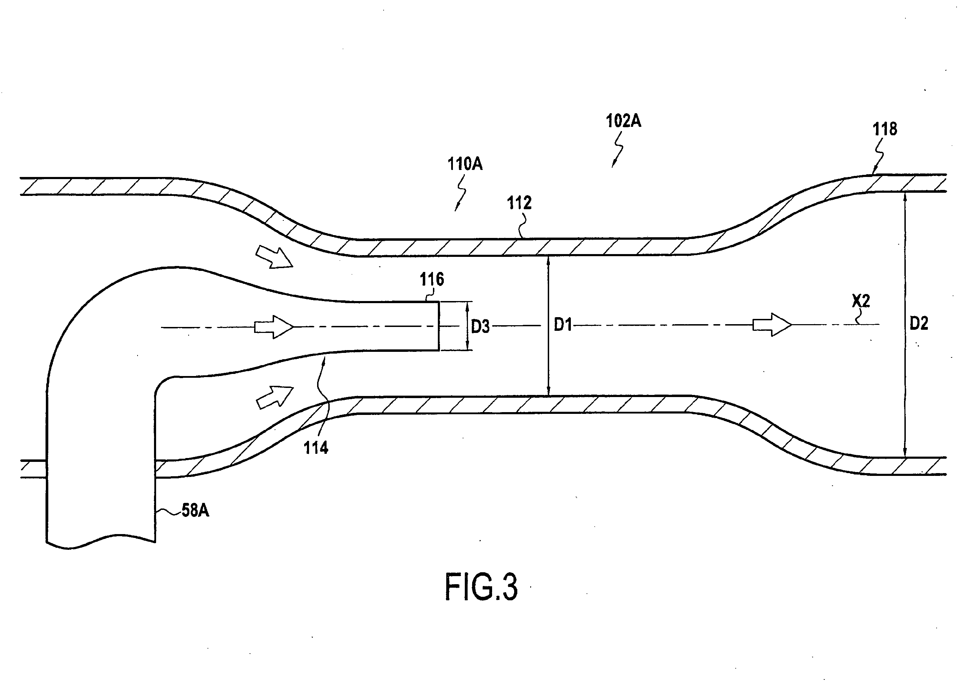

Le fonctionnement des pompes à jet 102A, 102B est illustré par la figure 3 qui représente une coupe axiale de la pompe à jet 102A (la pompe 102B étant similaire).

La pompe 102A comporte un corps constitué par un tronçon 110A de la conduite 22A. Ce tronçon 110A présente une portion 112 dont le diamètre D1 est inférieur au diamètre D2 du tronçon 56A, et qui est appelée mélangeur pour des raisons qui seront détaillées plus loin.

La pompe 102A comporte également un injecteur 114. Celui-ci est constitué par l'extrémité aval de la conduite 58A. L'injecteur 114 a la forme d'une conduite coudée qui pénètre dans la conduite 22A légèrement en amont du mélangeur 112.

L'extrémité 116 de l'injecteur 114 se présente donc comme un tronçon de tube coaxial au mélangeur 112 (axe X2), et dont le diamètre D3 est nettement inférieur au diamètre D1 du mélangeur 112. Par exemple, le diamètre D3 vaut un tiers de D1.

Le fluide sous haute pression refoulé par la pompe 26A dans la conduite 58A accélère lors de son passage dans l'injecteur 114. Il est alors est injecté dans la conduite d'alimentation 22A au niveau de la partie amont du mélangeur 112, dans le sens allant vers l'orifice d'admission de la pompe 26A (vers le bas). Dans le mélangeur 112, le fluide injecté par l'injecteur 114 et le carburant circulant dans la conduite d'alimentation 22A se mélangent.

La vitesse dans la conduite principale 22A est particulièrement élevée au niveau du mélangeur 112 du fait du faible diamètre de celui-ci. En revanche en aval du mélangeur 112, la vitesse du fluide diminue ; il s'établit progressivement au niveau d'une portion évasée 118 appelée diffuseur une pression supérieure à la pression en amont de la pompe à jet 102A.

Grâce à cela, l'injection de fluide réalisée par la pompe à jet, en entraînant le fluide dans la conduite 22A a pour effet d'augmenter la pression dans celle-ci en aval de la pompe

L'augmentation de pression résultant de l'action de la pompe 102A est régulée en modulant le débit de fluide injecté par l'injecteur 114. Cette régulation se fait en contrôlant une valve de régulation 60A disposée sur la conduite 58A d'alimentation en hydrogène de la pompe à jet 102A (ou respectivement 60B sur la conduite d'alimentation en oxygène) au moyen d'une unité de commande non représentée.

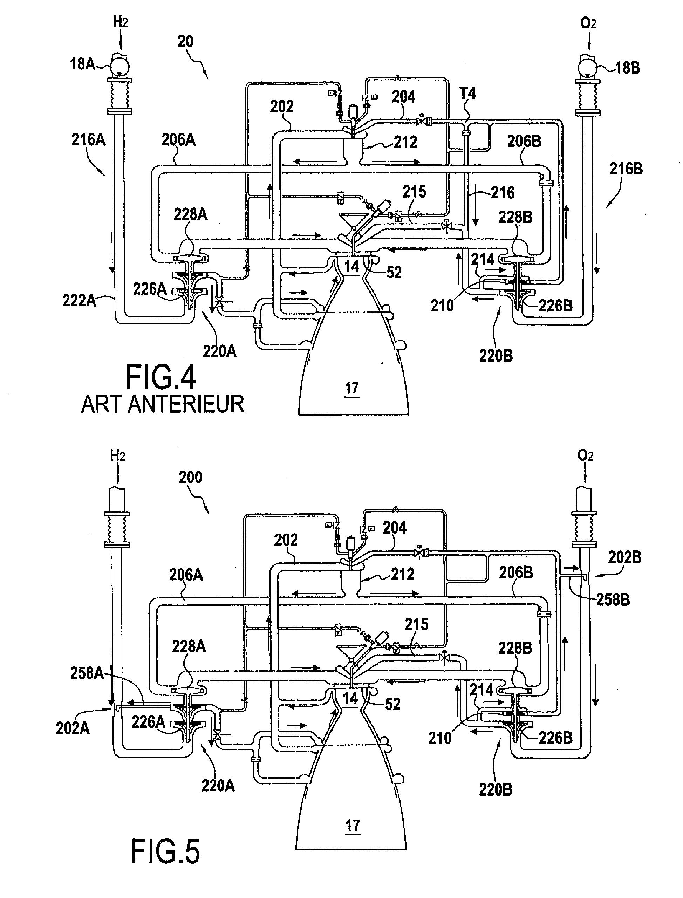

La figure 4 présente un moteur 20 qui est un moteur pour fusée de type connu. Son agencement et son fonctionnement sont analogues à ceux du moteur 10 précédemment décrit, et ne seront donc pour cette raison pas décrits en détail à nouveau.

Sauf mention contraire, le moteur 20 est identique au moteur 10. Pour cette raison, les éléments identiques ou similaires portent les mêmes références.

Les spécificités du moteur 20 sont les suivantes.

Tout d'abord, le moteur 20 comprend une seule préchambre de combustion 212. Ainsi au lieu d'avoir deux préchambres disposées respectivement dans l'alignement des deux turbopompes 20A et 20B, le moteur 20 comporte une préchambre centrale 212.

Celle-ci est alimentée en hydrogène et oxygène respectivement par deux conduites 202 et 204.

Les gaz de combustion sous pression s'échappant de la préchambre 212 sont séparés en deux flux qui sont dirigés via des conduites 206A et 206B vers les turbines 228A et 228B des deux turbopompes, qu'ils entrainent en rotation.

Ces gaz sont alors dirigés vers la chambre de combustion dans laquelle ils finissent d'être brûlés.

Afin d'améliorer le rendement du moteur 20, un surpresseur 210 est prévu sur le circuit de transfert de l'oxygène. Ce surpresseur permet de mettre sous pression l'oxygène dans la conduite 204. La pression à l'orifice de refoulement du surpresseur 210 est nettement plus élevée que la pression à l'orifice de refoulement de la pompe 226B ; typiquement, cette pression vaut 350 Bar alors que la pression à l'orifice de refoulement de la pompe 226B peut être voisine de 200 Bar. Cette pression est déterminée de manière à permettre une alimentation convenable en oxygène de la préchambre 212.

L'oxygène refoulé par la pompe 226B est dirigé vers la chambre de combustion via une conduite 215. Une partie de l'oxygène transitant par cette conduite est prélevé via une conduite 214 ; elle traverse alors le surpresseur 210.

Le surpresseur 210 est entraîné par la turbine 228B de la pompe 220B ; la turbine 228B, le surpresseur 210 et la pompe 226B partagent ainsi un arbre commun.

En aval du surpresseur 210, la conduite 214 se divise en deux au niveau d'un embranchement T4 : La plus grande partie de l'oxygène rejoint alors la conduite 215 via une liaison de bipasse 216 ; et la petite fraction restante d'oxygène est dirigée par la conduite 204 vers la préchambre 212, afin d'assurer l'alimentation en oxygène de celle-ci.

La figure 5 représente un moteur pour fusée 200. Celui-ci est un moteur dérivé du moteur 20, qui a été modifié de manière à y intégrer l'invention. Sauf mention contraire, le moteur 200 est identique au moteur 20. Pour cette raison, les éléments identiques ou similaires portent les mêmes références.

Dans le moteur 200, deux pompes à jet 202A et 202B ont été disposées sur les conduites d'alimentation en oxygène et en hydrogène 222A et 222B. Ces pompes à jet 202A et 202B ont des fonctionnements et des structures analogues à ceux des pompes 102A, 102B présentées précédemment. En outre, elles produisent le même résultat à savoir l'élévation de la pression d'alimentation des pompes 226A et 226B.

La pompe à jet 202A est alimentée en hydrogène sous pression par une conduite d'alimentation 258A, qui prélève de l'hydrogène à l'orifice de refoulement de la pompe 226A, de manière similaire à la pompe 102A.

La pompe à jet 202B est alimentée en oxygène sous pression par une conduite d'alimentation 258B, qui prélève de l'oxygène dans la portion de la conduite 214 située en aval de l'orifice de refoulement du surpresseur 210. De la sorte, pendant les phases de fonctionnement du moteur 200, l'oxygène refoulé à pression élevée par le surpresseur 210 entraîne l'oxygène circulant dans la conduite d'alimentation 222B, ce qui permet avantageusement d'élever la pression à l'orifice d'admission de la pompe 226B.

## Revendications

1. Moteur (100,200) pour fusée, comprenant une préchambre (12A,12B ;212) de combustion ; une chambre principale (14) de combustion ; deux conduites d'alimentation (22A,22B ;222A,222B) pour l'alimentation du moteur respectivement en carburant et en comburant ; deux turbopompes (20A,20B ;220A,220B), chacune comprenant une pompe (26A,26B ;226A,226B) associée à une turbine (28A,28B ;226A,226B), lesdites pompes étant disposées à des extrémités aval (30A,30B) respectives des conduites d'alimentation et étant aptes à pomper le carburant et le comburant des conduites d'alimentation vers la chambre principale de combustion via un circuit de distribution de fluides (32) ;
le circuit de distribution étant apte à diriger au moins une partie du carburant et du comburant vers la préchambre pour y être brûlée, et à diriger les gaz chauds ainsi produits de la préchambre à la chambre de combustion en entraînant au moins une turbine desdites turbopompes ;
le moteur **se caractérisant en ce que** dans au moins une première conduite d'alimentation alimentant une première desdites pompes est agencée une pompe à jet (102A,102B ;202A,202B), et que le circuit de distribution est apte à mettre sous pression une partie du fluide circulant dans ladite première conduite d'alimentation et à la diriger vers ladite pompe à jet, et ladite pompe à jet est apte à injecter ladite partie de fluide de manière à entraîner le fluide circulant dans ladite première conduite d'alimentation vers un orifice d'admission de ladite première pompe.

2. Moteur selon la revendication 1 dont le circuit de distribution est agencé de telle sorte que le fluide injecté par la pompe à jet ne comporte pas de gaz de combustion.

3. Moteur selon la revendication 1 ou 2, dans lequel la pompe à jet injecte uniquement ladite partie de fluide dans la première conduite d'alimentation.

4. Moteur selon l'une quelconque des revendications 1 à 3, dans lequel le circuit de distribution est agencé de telle sorte que le fluide injecté par la pompe à jet ainsi que le fluide circulant dans la première conduite d'alimentation au point d'injection de fluide par la pompe à jet sont en phase liquide.

5. Moteur selon l'une quelconque des revendications 1 à 4, dans lequel ladite partie de fluide est une partie du fluide refoulé par ladite première pompe (26A,26B).

6. Moteur (200) selon l'une quelconque des revendications 1 à 4, comprenant en outre un surpresseur (210) apte à comprimer le carburant ou le comburant en amont de ladite première pompe, et dans lequel ladite partie de fluide est constituée par un flux de fluide refoulé par le surpresseur.

7. Moteur selon l'une quelconque des revendications 1 à 6, dans lequel ladite pompe à jet est disposée sur un tronçon (56A,56B) de ladite première conduite d'alimentation (22A,22B) parallèle à un axe (X) du moteur.

8. Moteur selon l'une quelconque des revendications 1 à 7, comprenant en outre une valve de régulation (60A,60B) disposée sur la conduite d'alimentation (58A,58B) en fluide sous pression de ladite pompe à jet, et dont une ouverture peut être commandée de manière à contrôler une pression à un orifice d'admission de la première pompe.

## Patentansprüche

1. Triebwerk (100, 200) für eine Rakete, umfassend eine Vorbrennkammer (12A, 12B; 212), eine Hauptbrennkammer (14), zwei Versorgungsleitungen (22A, 22B; 222A, 222B) für die Versorgung des Triebwerks mit Treibstoff bzw. mit Sauerstoffträger, zwei Turbopumpen (20A, 20B; 220A, 220B), wobei jede eine einer Turbine (28A, 28B; 228A, 228B) zugeordnete Pumpe (26A, 26B; 226A, 226B) umfasst, wobei die Pumpen an jeweiligen stromabwärtigen Enden (30A, 30B) der Versorgungsleitungen angeordnet und geeignet sind, den Treibstoff und den Sauerstoffträger von den Versorgungsleitungen zu der Hauptbrennkammer über einen Fluidverteilerkreis (32) zu pumpen,
wobei der Verteilerkreis geeignet ist, wenigstens einen Teil des Treibstoffs und des Sauerstoffträgers zu der Vorkammer zu leiten, um darin verbrannt zu werden, und die so erzeugten heißen Gase unter Antreiben wenigstens einer Turbine der Turbopumpen von der Vorkammer zu der Brennkammer zu leiten,
wobei das Triebwerk **dadurch gekennzeichnet ist, dass** in wenigstens einer ersten Versorgungsleitung, die eine erste der Pumpen versorgt, eine Strahlpumpe (102A, 102B; 202A, 202B) angeordnet ist und dass der Verteilerkreis geeignet ist, einen Teil des in der ersten Versorgungsleitung fließenden Fluids unter Druck zu setzen und ihn zu der Strahlpumpe zu leiten, und die Strahlpumpe geeignet ist, den Fluidteil einzuspritzen, so dass das in der ersten Versorgungsleitung fließende Fluid zu einer Zuführöffnung der ersten Pumpe mitgenommen wird.

2. Triebwerk nach Anspruch 1, dessen Verteilerkreis derart angeordnet ist, dass das durch die Strahlpumpe eingespritzte Fluid keine Verbrennungsgase enthält.

3. Triebwerk nach Anspruch 1 oder 2, wobei die Strahlpumpe lediglich den Fluidteil in die erste Versorgungsleitung einspritzt.

4. Triebwerk nach einem der Ansprüche 1 bis 3, wobei der Verteilerkreis derart angeordnet ist, dass das durch die Strahlpumpe eingespritzte Fluid sowie das in der ersten Versorgungsleitung an der Stelle der Fluideinspritzung durch die Strahlpumpe fließende Fluid in flüssiger Phase sind.

5. Triebwerk nach einem der Ansprüche 1 bis 4, wobei der Fluidteil ein Teil des durch die erste Pumpe (26A, 26B) geförderten Fluids ist.

6. Triebwerk (200) nach einem der Ansprüche 1 bis 4, ferner umfassend einen Vorschaltverdichter (210), der geeignet ist, den Treibstoff oder den Sauerstoffträger stromaufwärts der ersten Pumpe zu verdichten, und wobei der Fluidteil durch einen durch den Vorschaltverdichter geförderten Fluidstrom gebildet ist.

7. Triebwerk nach einem der Ansprüche 1 bis 6, wobei die Strahlpumpe an einem Abschnitt (56A, 56B) der ersten Versorgungsleitung (22A, 22B), der parallel zu einer Achse (X) des Triebwerks verläuft, angeordnet ist.

8. Triebwerk nach einem der Ansprüche 1 bis 7, ferner umfassend ein Regelventil (60A, 60B), das an der Druckfluidversorgungsleitung (58A, 58B) der Strahlpumpe angeordnet ist und von dem eine Öffnung gesteuert werden kann, um einen Druck an einer Zuführöffnung der ersten Pumpe zu steuern.

## Claims

1. An engine (100, 200) for a rocket having a combustion prechamber (12A, 12B; 212); a main combustion chamber (14); two feed pipes (22A, 22B; 222A, 222B) for feeding the engine respectively with fuel and with oxidizer; and two turbopumps (20A, 20B; 220A, 220B), each having a pump (26A, 26B; 226A, 226B) associated with a turbine (28A, 28B; 226A, 226B), said pumps being arranged at respective downstream ends (30A, 30B) of the feed pipes and being suitable for pumping the fuel and the oxidizer from the feed pipes to the main combustion chamber via a fluid distribution circuit (32);
the distribution circuit being suitable for directing at least a portion of the fuel and of the oxidizer to the prechamber in order to be burnt therein, and for directing the hot gas as produced in that way from the prechamber to the combustion chamber while driving at least one turbine of said turbopumps;
the engine being **characterized in that** a jet pump (102A, 102B; 202A, 202B) is arranged in at least a first feed pipe feeding a first of said pumps, and **in that** the distribution circuit is suitable for putting under pressure a portion of the fluid flowing in said first feed pipe and directing it to said jet pump, and said jet pump is suitable for injecting said portion of fluid in such a manner as to entrain the fluid flowing in said first feed pipe towards an inlet orifice of said first pump.

2. An engine according to claim 1, wherein the distribution circuit is arranged in such a manner that the fluid injected by the jet pump does not include combustion gas.

3. An engine according to claim 1 or claim 2, wherein the jet pump injects only said fluid portion into the first feed pipe.

4. An engine according to any one of claims 1 to 3, wherein the distribution circuit is arranged in such a manner that the fluid injected by the jet pump and the fluid flowing in the first feed pipe at the fluid injection point by the jet pump are in the liquid phase.

5. An engine according to any one of claims 1 to 4, wherein said fluid portion is a portion of the fluid delivered by said first pump (26A, 26B).

6. An engine (200) according to any one of claims 1 to 4, further including a pressure booster (210) suitable for compressing the fuel or the oxidizer upstream from said first pump, and wherein said fluid portion is constituted by a fluid stream delivered by the pressure booster.

7. An engine according to any one of claims 1 to 6, wherein said jet pump is arranged on a segment (56A, 56B) of said first feed pipe (22A, 22B) that is parallel to an axis (X) of the engine.

8. An engine according to any one of claims 1 to 7, further including a regulator valve (60A, 60B) arranged in the feed pipe (58A, 58B) for feeding fluid under pressure to said jet pump and having an opening that can be controlled in such a manner as to control pressure at an inlet orifice of the first pump.
